# FASCICULE DE BREVET EUROPEEN

(11) **EP 0 544 602 B1**
(45) Date de publication et mention de la délivrance du brevet: **30.09.1998**
(21) Numéro de dépôt: 92420426.6
(22) Date de dépôt: 19.11.1992
(51) Int. Cl.: A01N 25/34

(54) **Systèmes de conteneurisation pour compositions pour l'agriculture**
Gefässsystemen für landwirtschaftliche Mittel
Container systems for agricultural compositions

(30) Priorité: 21.11.1991 FR 9114612; 27.10.1992 FR 9213131
(43) Date de publication de la demande: 02.06.1993
(73) Titulaire: RHONE-POULENC AGROCHIMIE, 69009 Lyon (FR)
(72) Inventeur: Croze, Ernest, F-69500 Bron (FR); Graber, Gérard, F-69003 Lyon (FR); Gautier, Martine, F-69130 Ecully (FR)
(74) Mandataire: Bentham, Stephen

(56) Documents cités:
- EP-A- 0 391 851
- WO-A-82/02647
- FR-A- 1 263 098
- US-A- 3 877 928
- CHEMICAL PATENTS INDEX, DOCUMENTATION ABSTRACTS JOURNAL Section Ch, Week 8520, Derwent Publications Ltd., London, GB; Class C, AN 120188
- CHEMICAL ABSTRACTS, vol. 83, no. 9, 1 Septembre 1975, Columbus, Ohio, US; abstract no. 73421m, N.V.SEDA ET. AL. 'Use of water-soluble film for packaging wettable pesticide powders' page 220 ;

## Description

### DOMAINE TECHNIQUE DE L'INVENTION

### 1. Objet de l'invention

La présente invention concerne un nouveau système de conteneurisation de matières pouvant présenter un danger à l'égard de l'environnement, notamment de matières actives, par exemple de matières actives en agriculture, à l'aide de sacs ou sachets solubles dans l'eau.

### 2. Etat de la technique antérieure

Beaucoup de matières actives en agriculture sont utilisées dans le but d'obtenir de meilleurs résultats et de meilleurs rendements des cultures.

Dans la présente invention, par matières actives en agriculture, on entend toutes sortes de matières actives utilisées en agriculture (y compris la culture des jardins et espaces verts) telles que les agents pour la protection des plantes, les produits agrochimiques, les pesticides, les régulateurs de croissance ou les agents de nutrition des plantes. Les pesticides sont plus particulièrement des herbicides, des insecticides, des fongicides, des nématicides et des acaricides.

Ces matières actives sont généralement fabriquées, transportées et vendues sous une forme concentrée. L'utilisateur, c'est-à-dire l'agriculteur, les dilue ensuite dans l'eau en vue de les pulvériser et/ou les disperser de manière homogène sur toute la surface qu'il veut traiter, qu'il s'agisse d'une surface de terrain où il y a déjà une culture, ou bien d'une surface où on a l'intention de mettre en place une culture, ou bien encore une surface non cultivée qu'on veut débarrasser de toute végétation ou autre parasite indésirable.

En raison de l'activité intense des agriculteurs, il est bien entendu désirable d'avoir une dispersion dans l'eau aussi rapide que possible de la matière active considérée. Il est de plus toujours souhaitable que cette dispersion dans l'eau soit aussi homogène que possible.

Bien des matières actives ont été utilisées sous forme de formulation en poudre, voire de poudre en sachet soluble, mais ce type de présentation garde toujours les inconvénients suivants :
* durée de mélange accrue notablement par la durée de mouillabilité et la durée de dispersabilité dans l'eau
* pollution de l'atmosphère environnant la cuve de mélange par envol d'une partie de la poudre
* risque de formation de grumeaux. Ce problème doit être solutionné par des agents anti-mottants ( anti-caking ), mais leur effet n'est pas toujours satisfaisant.

Ce sont quelques unes des raisons qui ont rendu l'usage de compositions effervescentes particulièrement attractif.

Sur un plan pratique, l'utilisation directe de poudres, notamment effervescentes, se heurte à diverses difficultés. Ainsi, le phénomène de tassement rend impossible, pour un dosage précis, le recours à une mesure de volume et contraint à recourir à une pesée ; et même dans ce cas, le problème du comportement des poudres vis à vis de l'écoulement rend cette pesée malaisée. Une autre difficulté liée à l'utilisation de poudres découle de ce que celles ci contiennent toujours une certaine quantité de poussières susceptibles d'entrer en contact avec les personnes qui les manipulent ou les fabriquent ou les utilisent, en sorte qu'elles sont néfastes du point de vue de l'environnement, de la sécurité, et de l'hygiène.

C'est pour pallier ces inconvénients qu'on a préféré utiliser les compositions effervescentes sous forme de pastilles ou de comprimés, par exemple selon les demandes EP 391851 et WO 90/00007. Ces pastilles doivent être relativement grosses pour correspondre à la dose (en g/ha) de matière active devant être appliquée. Malheureusement, ces pastilles présentent aussi des inconvénients importants, dont quelques uns sont rappelés dans la demande européenne n° 391851. Les comprimés effervescents sont particulièrement faciles à mettre en oeuvre quand les matières actives sont solubles dans l'eau. Quand les matières actives sont insolubles dans l'eau et que l'agent effervescent est constitué de carbonate de sodium et d'un acide, il se produit souvent une sorte de passivation du comprimé qui rend la dispersion du comprimé dans l'eau difficile, ou tout au moins très lente. L'usage du carbonate de potassium comme agent effervescent à la place du carbonate de sodium ne remédie pas totalement à cette difficulté ; en effet sa forte hygroscopicité tend à le faire prendre en masse et à lui faire perdre son activité effervescente par réaction prématurée sous l'effet de l'humidité. C'est pour cette raison que la demande de brevet européenne 391851 propose de réaliser des comprimés spéciaux contenant des additifs spéciaux susceptibles de former des liaisons avec l'eau afin de supprimer la passivation des comprimés.

Quoi qu'il en soit de ces compositions, il n'en reste pas moins que les comprimés ou pastilles effervescentes comportent divers inconvénients :
* il est nécessaire de manipuler et comprimer individuellement chaque pastille en particulier. Même si cela est évidemment automatisé, il faut néanmoins mettre en oeuvre des machines assez élaborées, donc coûteuses et nécessitant un investissement spécial.
* les machines nécessaires à la réalisation de comprimés sont d'autant plus coûteuses qu'il est nécessaire de travailler sous pression très nettement supérieure à la pression atmosphérique.
* la compression de poudres ordinaires, tout spécialement de poudres très fines, pose certaines difficultés quant à l'obtention de comprimés corrects. En effet, lors de l'étape de compression du comprimé, réalisée dans la matrice de pastillage, une certaine quantité d'air reste emprisonnée dans la masse de la poudre. A la fin de l'opération de compression, et lors de l'expulsion du comprimé ainsi obtenu hors de la matrice de pastillage, l'air ainsi emprisonné se dilate et peut conduire à la scission du comprimé. C'est pourquoi on est contraint, généralement et pratiquement, de réaliser les pastilles à partir de granulés, mais il est alors nécessaire de rajouter une étape supplémentaire dans le processus de réalisation des pastilles.
* la réalisation de pastilles ou comprimés requiert le mélange d'ingrédients solides avec un solvant liquide, suivi d'une opération de séchage. Outre les problèmes pratiques que cela pose, cela est nuisible au caractère économique du procédé.
* enfin, il peut arriver que les comprimés ou pastilles effervescents se brisent au cours du stockage ou du transport, donnant naissance à une petite quantité de poudre susceptible de rester dans l'emballage et donc de lui conférer un caractère polluant même lorsqu'on l'a vidé de son contenu normal.

Dans le brevet US 2506649, on a proposé des compositions nettoyantes et effervescentes comprenant un sac à deux couches, ce sac contenant une composition nettoyante effervescente. La première couche du sac est la couche intérieure et est capable de laisser passer le gaz carbonique et les solutions aqueuse dégagées par l'effervescence. La deuxième couche du sac est avantageusement en matériau tel que le coton ou autre matériau cellulosique et a une surface irrégulière à caractère abrasif lui permettant de nettoyer les cuves dans laquelle elle se trouve. Un tel système est inutilisable dans les cuves des appareils de pulvérisation utilisés par les agriculteurs.

L'utilisation de sacs formés d'un matériau filmogène soluble ou despersible dans l'eau est divulgué dans, par example, JP-A-60/061505, US-A-3,877,928, FR-A-1,263,098 Chem. Abs 83: 73421m et WO-A-82/02647.

### BUTS DE L'INVENTION

Un but de la présente invention est de remédier aux inconvénients des compositions connues.

Un autre but de l'invention est de fournir un système de présentation de matières actives en agriculture mettant en oeuvre des formulations effervescentes.

Un autre but de la présente invention est d'éviter l'usage de pastilles ou de comprimés ayant les inconvénients connus.

Un autre but de la présente invention est de rendre les compositions effervescentes utilisables de manière plus générale et plus facile et plus efficace.

Un autre but de la présente invention est de fournir un système de présentation de produits agrochimiques peu sensible à l'humidité.

Un autre but de l'invention est de fournir un système de présentation de produits agrochimiques présentant une stabilité au stockage améliorée.

Un autre but de l'invention est de fournir un système de conteneurisation offrant une meilleure résistance au choc, notamment en cas de chute.

Un autre but de l'invention est de fournir un système de conteneurisation comportant une matière active telle que les agents de protection des plantes, les produits agrochimiques, les pesticides, les régulateurs de croissance. Par conteneurisation, on désigne l'action de contenir ; par système de conteneurisation on entend un système complexe comprenant un contenu et son contenant.

Un autre but de l'invention est de fournir un système de conteneurisation comportant des agents de protection des plantes ayant un ou plusieurs des avantages suivants :
* on évite le contact du produit agrochimique avec l'utilisateur ou le fabricant ou le manipulateur du produit.
* le produit agrochimique est laissé au contact de l'eau où il doit se disperser et/ou se dissoudre en évitant le contact accidentel de produit concentré soit avec l'environnement soit avec les êtres humains ou les animaux.
* le produit chimique peut être fourni dans des unités ayant une quantité prédéterminée de matière active, évitant la nécessité de procéder à des mesures de matières actives et de produit toxique ou potentiellement toxique.

Un autre but de la présente invention est de fournir un système de présentation de matières actives en agriculture ayant simultanément les qualités suivantes :
* il est autodispersable, c'est-à-dire qu'il requiert un minimum d'énergie et de temps pour être dispersé et dilué dans la cuve de pulvérisation (contenant de l'eau)
* le contact des matières actives avec l'utilisateur (agriculteur, transporteur, manipulateur) est inexistant
* l'emballage restant après usage du produit ne contient plus aucune trace de résidu.
* il n'y a pas lieu après usage de nettoyer les emballages ayant contenu des produits agrochimiques.

Un autre but de la présente invention est de rendre les compositions effervescentes utilisables même lorsqu'elles ne comportent pas d'additif de nature spéciale et particulière.

Un autre but de la présente invention est de fournir des compositions très facilement et très rapidement dispersables dans l'eau, spécialement dans l'eau des cuves des appareils de pulvérisation utilisés par les agriculteurs.

Un autre but de l'invention est de fournir des compositions faciles et peu coûteuses à réaliser, et en particulier d'éviter les frais et difficultés de compression et/ou de pastillage et/ou de séchage.

Un autre but de l'invention est de fournir des systèmes de conteneurisation de matières actives pour l'agriculture qui puissent être mis en oeuvre de façon simple, sans nécessiter l'intervention de pressions excessives.

Il a maintenant été trouvé que ces buts pouvaient être atteints en tout ou en partie grâce aux systèmes de conteneurisation de matières actives selon l'invention.

### EXPOSE DETAILLE DE L'INVENTION

Les systèmes de conteneurisation de matières actives selon l'invention sont caractérisés en ce qu'ils comprennent :
a) un sac dont la paroi est un film constitué d'un matériau filmogène, soluble ou dispersable dans l'eau
b) une composition effervescente et pulvérulent sous forme de poudre granulés ou pastilles, cette composition comprenant un agent effervescent et une ou plusieurs matières pouvant présenter un danger à l'égard de l'environnement, notamment une matière active, par exemple une matière active en agriculture,
   ledit sac étant fermé et renfermant ladite composition.

Par matériau dispersable dans l'eau, il faut entendre un matériau qui, sous l'effet d'une agitation normale (telle que pratiquée couramment par les agriculteurs dans les cuves de pulvérisation), conduit à une dispersion de fines particules de taille inférieure à 40 micromètres, de préférence 15 micromètres. Lorsque la matière active des systèmes de conteneurisation selon l'invention est une matière active en agriculture, il est bien entendu que lesdits systèmes de conteneurisation sont utilisables en vue du traitement aussi bien de surfaces en zones cultivées que non cultivées. Ces deux types d'application font partie de l'invention.

Selon un aspect avantageux de l'invention, la quantité de composition effervescente à l'état pulvérulent présente dans un système de conteneurisation selon l'invention est une quantité efficace pour traiter une zone donnée de terrain cultivé ou non cultivé.

Selon un autre aspect de l'invention, la composition effervescente à l'état pulvérulent, au sens de la présente invention, comprend aussi bien les poudres que les granulés et les pastilles. Par poudre, on entend un matériau dont les particules constitutives ont une taille moyenne généralement comprise entre 1 et 50 micromètres, de préférence entre 5 et 20 micromètres. Par granulé, on entend un corpuscule dont la taille moyenne est généralement comprise entre 50 micromètres et 1 centimètre, de préférence entre 150 micromètres et 5 millimètres. Des pastilles de taille supérieure, par exemple allant jusqu'à 5 centimètres, peuvent aussi être utilisées sans toutefois qu'il y ait là un avantage important. On préfère mettre en oeuvre des granulés, car ils présentent généralement une plus grande facilité d'écoulement ce qui diminue le temps de remplissage des sachets solubles dans l'eau. En outre, la réalisation de grosses pastilles est plus compliquée que celle de granulés.

Selon un autre aspect de l'invention, la composition effervescente à l'état pulvérulent, spécialement dans le cas des poudres, peut résulter avantageusement d'un simple mélange des ingrédients, ce qui évite toute opération d'agglomération. Cette variante de l'invention est préférée lorsque la matière active à formuler présente un risque d'explosivité, au niveau de la fabrication industrielle du produit.

Selon un autre aspect de l'invention, la composition effervescente à l'état pulvérulent peut également se présenter sous forme de granulés. Dans ce cas, l'introduction de la composition effervescente à l'état pulvérulent dans le sac en matériau filmogène présente des avantages de mise en oeuvre pour le fabricant, tels qu'une simplicité de fabrication, une plus grande facilité d'écoulement et une meilleure hygiène industrielle.

Un moyen particulièrement approprié à la réalisation de tels granulés consiste à effectuer une agglomération à sec (notamment sans solvant) des constituants de la composition effervescente à l'état pulvérulent par une technique de compactage, ou frittage, de préférence à température ambiante ou au moins inférieure à 50°C. De préférence, l'appareil retenu pour cette technique est composé de deux cylindres tournants d'axes parallèles appliqués très fortement l'un vers l'autre et animés chacun d'un mouvement de rotation en sens inverse. Ce procédé est particulièrement avantageux, et donne aux granulés qui en résultent un caractère préférentiel dans la mise en oeuvre de l'invention. L'absence d'étape de séchage donne un caractère particulièrement économique à cet aspect de l'invention.

Des granulés ( ou des pastilles, bien que les granulés soient préférés ) particulièrement appropriés à la réalisation de l'invention sont caractérisés par l'existence d'un espace interstitiel et/ou interparticulaire. Cet espace est généralement compris entre 0,05 et 20% en volume par rapport au volume d'un granulé pris isolément, de préférence compris entre 0,5 et 5%.

Selon une autre variante de l'invention, les granulés (ou les pastilles, bien que les granulés soient préférés) sont avantageusement caractérisés en ce que leur porogramme est essentiellement monomodal, c'est-à-dire qu'il ne comporte qu'un maximum. Le porogramme est la courbe donnant la répartition du nombre des pores des granulés en fonction de la taille de ces pores.

Cette répartition particulière correspond à une homogénéité de structure et de propriétés physiques des granulés qui les rend particulièrement intéressants, notamment quant à la qualité de la dispersion ultérieure dans l'eau desdits granulés. Cette courbe de répartition des pores est avantageusement obtenue par mesures à l'aide d'un porosimètre à mercure selon des techniques connues en soi.

Selon un autre aspect particulier de l'invention, la densité du système de conteneurisation selon l'invention est supérieure à 1, de préférence comprise entre 1,005 et 2 ce qui permet d'obtenir une immersion améliorée et plus rapide après introduction dans la cuve de pulvérisation (dans la présente description, on utilise le terme densité comme synonyme de poids spécifique expié en gramme par centimètre cube). En outre la vitesse de dissolution ou dispersion des ingrédients solides, notamment de la matière active, est particulièrement élevée, notamment par le fait que le contact entre l'eau et la composition effervescente est amélioré, et encore par le fait que les bulles gazeuses issues de l'effervescence contribuent au délitage du sachet

En vue de réaliser de tels systèmes de conteneurisation de densité supérieure à 1, on met en oeuvre avantageusement des systèmes de conteneurisation contenant une composition effervescente à l'état pulvérulent comportant elle même avantageusement un agent densifiant. Par agent densifiant, il faut entendre une charge ou support minéral ou organique, de densité comprise entre 1,2 et 8. De telles charges sont choisies, de manière préférée, parmi les sels de baryum ou de titane, et, de manière encore plus préférée, parmi l'un des composés suivants : sulfate de baryum, monoxyde de titane.

En vue d'améliorer le contact entre l'eau de la cuve de pulvérisation et le système de conteneurisation selon l'invention et/ou la composition effervescente à l'état pulvérulent, on préfère mettre en oeuvre des systèmes de conteneurisation exempts de poche gazeuse. Ces systèmes de conteneurisation sont généralement tels que, le sac étant scellé, il n'est pas possible de voir le moindre espace entre la composition effervescente à l'état pulvérulent et la paroi du sac, et/ou qu'il n'est pas possible, manuellement, de décoller la paroi du sac du matériau pulvérulent. Cela correspond donc à un taux de remplissage maximum. En pratique il est avantageux de remplir les sacs de l'invention sous une pression absolue inférieure à 200 millibar, de préférence inférieure à 150 millibar, de manière à assurer l'adhérence du film à la composition effervescente au moment de l'ensachage et avant scellement final du sac, et même jusqu'à l'usage final des systèmes de conteneurisation selon l'invention, même après stockage.

Selon un autre aspect de l'invention, le sac en matériau filmogène contient la composition effervescente à l'état pulvérulent avec une atmosphère telle que la quantité d'eau présente dans cette atmosphère soit inférieure à 4 mg par litre, de préférence inférieure à 3 mg par litre. Le volume de l'atmosphère dans le sac est égal au volume intérieur du sac moins le volume de la poudre sans les interstices entre grains.

Selon un autre aspect de l'invention, la quantité de composition effervescente à l'état pulvérulent contenue dans le sac est comprise entre 1 g et 3 kg, de préférence entre 50 g et 1 kg . C'est un avantage de l'invention, par rapport aux pastilles et comprimés, de pouvoir mettre dans un même emballage des quantités bien plus importantes de matière active dans une unité manipulée par l'agriculteur.

Selon un autre aspect de l'invention, le matériau filmogène soluble ou dispersable dans l'eau constituant la paroi du sac peut être de type très varié. Il est de préférence soluble dans l'eau. Il s'agit généralement de matériau polymérique tel que l'oxyde de polyéthylène, le polyéthylène glycol, l'amidon ou l'amidon modifié; l'alkyl ou hydroxyalkylcellulose, telle que l'hydroxymethylcellulose, l'hydroxyethylcellulose, l'hydroxypropyl cellulose; la carboxymethylcellulose; les polyvinylethers tels que le poly methyl vinylether ou le poly(2-methoxyethoxyethylene); le poly(2,4-dimethyl-6-triazinylethylene) ; le poly(3-morpholinyl ethylene); le poly(N-1,2,4-triazolylethylene); l'acide poly(vinylsulfonique); les polyanhydrides ; les résines melamine-formaldehyde ou urée-formaldehyde à bas poids moléculaire; le poly(2-hydroxyethyl methacrylate); l'acide polyacrylique et ses homologues.

Les matériaux préférés pour constituer les sacs sont l'oxyde de polyéthylène, la methylcellulose, et l'alcool polyvinylique (PVA). Un matériau préféré pour constituer les parois du sac est l'alcool polyvinylique. Quand on utilise le PVA, on préfère mettre en oeuvre un polyacétate de vinyle (ou un autre ester de vinyle) partiellement ou totalement hydrolysé ou alcoolysé, c'est-à-dire hydrolysé ou alcoolysé à 40-100%, de préférence 80-99%. Des copolymères ou d'autres dérivés de ces polymères peuvent aussi être utilisés.

Selon un autre aspect de l'invention, le sac contenant la composition effervescente à l'état pulvérulent comprend un premier film non plan en matériau soluble ou dispersable dans l'eau , ce premier film étant adjacent à un second film, lui-même en matériau soluble ou dispersable dans l'eau, le long d'une ligne de scellement continu liant ces deux films, ladite ligne constituant une ligne fermée qui ne se recoupe pas et délimitant une région essentiellement plane.

Selon un autre aspect de l'invention, le sac contenant la composition effervescente à l'état pulvérulent est constitué d'un seul film, et de préférence comprend au moins trois zones de scellement, dont deux sont sensiblement rectilignes et coplanaires et coupées par la troisième en deux zones sensiblement ponctuelles.

Les compositions effervescentes à l'état pulvérulent utilisables dans l'invention comprennent généralement:
* une matière active, de préférence active en agriculture, sous forme solide ou mise sous forme solide, telle qu'un agent pour la protection des plantes ou un matériau agrochimique,
* un agent effervescent

Par agent effervescent, on entend un agent ou composé susceptible de libérer un gaz tel que CO₂, et par là, de donner lieu à la dispersion de la poudre dans l'eau. Sur un plan pratique, l'agent effervescent est avantageusement constitué d'un couple de produits tels qu'un carbonate (ou hydrogénocarbonate, de préférence alcalin) et un acide (de préférence solide et faible). Il est bien entendu que dans le cas où l'une des matières actives de la composition effervescente possède au moins une fonction acide, l'agent effervescent peut consister uniquement en un carbonate ou hydrogénocarbonate, de préférence alcalin. Le rapport massique entre l'acide, ou la matière active de la composition effervescente possédant au moins une fonction acide, et le carbonate est généralement compris entre 0,3 et 2 , de préférence entre 0,5 et 1 .

Le carbonate alcalin peut être dérivé d'un métal alcalin (notamment podium ou potassium ) ou alcalino-terreux ( calcium ou magnésium ), ou d'un groupe ou cation ammonium ou organoammonium ( carbonate dérivé d'une amine primaire secondaire ou tertiaire ou d'un cation ammonium quaternaire ), mais est de préférence dérivé d'un métal alcalin.

L'acide solide et faible est avantageusement un acide carboxylique ou polycarboxylique ou phosphorique ou phosphonique ou l'un de leurs sels ou esters à fonction acide.

Par matière active mise sous forme solide, on entend une matière active liquide imprégnée sur un support solide ou une matière active solide dissoute dans un solvant, lui-même imprégné sur un support solide. Comme support solide on utilise des matériaux inertes du point de vue de l'agriculture.

De manière préférentielle, on utilise des compositions comprenant en outre:
un agent mouillant, spécialement pour le cas où la matière active en agriculture est insoluble dans l'eau,
un agent dispersant, spécialement pour le cas où la matière active en agriculture est insoluble dans l'eau ; cet agent est capable de maintenir la matière active en agriculture en suspension dans l'eau en évitant sa sédimentation,
un agent de gonflement ou agent gonflant ; il s'agit d'un composé susceptible de gonfler en présence d'eau,
un agent déssicant ou desséchant, capable d'absorber une éventuelle humidité résiduelle,
un agent densifiant,
un support ou charge,
   tous ces ingrédients étant des ingrédients acceptables en agriculture.

Les quantités de constituants des compositions effervescentes utilisées dans l'invention sont généralement comprises (les pourcentages indiqués sont des pourcentages en poids) :
entre 1 % et 80 % de matière active en agriculture,
entre 10 % et 80 % d'agent effervescent
entre 0 et 10 % d'agent mouillant, de préférence entre 0,1 et 8 %
entre 0 et 20 % d'agent dispersant, de préférence entre 3 et 15 %
entre 0 et 20 % d'agent gonflant, de préférence entre 1 et 15 %
entre 0 et 60 % d'agent densifiant, de préférence envi 5 et 20 %
entre 0 % et 30 % pour l'agent desséchant, de préférence entre 5 et 20 %
entre 0 et 50 % de support, de préférence entre 0 et 30 %

Selon une variante de l'invention, les systèmes de conteneurisation décrits ci-avant peuvent comprendre en outre un conteneur extérieur. Ce conteneur extérieur a des parois constituées d'un système à au moins deux couches collées l'une à l'autre, l'une en papier cartonné souple, appelé en anglais kraft-liner, et l'autre en polyéthylène . Ce système bi-couche peut comprendre en outre une troisième couche collée au polyéthylène et constituée d'aluminium.

Les systèmes de conteneurisation selon l'invention s'utilisent pratiquement en les mettant dans des cuves contenant de l'eau ; ces cuves peuvent être soumises éventuellement à une agitation. Le mélange ainsi obtenu, appelé bouillie de pulvérisation, peut être utilisé tel quel pour être appliqué sur les surfaces cultivées ou non cultivées à traiter.

Les exemples suivants, donnés à titre non limitatif, illustrent l'invention et montrent comment elle peut être mise en oeuvre.

Tous les granulés utilisés dans des sachets, dans les exemples suivants, ont un porogramme monomodal.

### Exemple 1

On mélange à sec les ingrédients suivants, à l'état de solides pulvérulents:
10,5 g de fongicide Bromuconazole
33 g d'acide citrique
49 g d'hydrogénocarbonate de sodium
6,5 g d'agent dispersant (naphtalène sulfonate de sodium condensé avec du formol)
1 g d'agent mouillant (lauryl sulfate de sodium)

Ce mélange est introduit dans une poche constituée par un film en alcool polyvinylique (polyacétate de vinyle hydrolysé à 88 %) soluble dans l'eau froide. Ce film a été thermoformé, c'est-à-dire qu'il a été déformé par la chaleur et qu'on lui a fait épouser par aspiration la forme d'une poche, donnée par une matrice. Un deuxième film est posé sur ladite poche, et est fixé à celle-ci par soudage à chaud, simultanément à la création de vide au moyen d'une pompe donnant naissance à une pression absolue de 100 millibar. . On n'observe aucun espace libre entre les solides pulvérulents et la paroi du sac. La densité du sac est de 1,1.

Ce sac estjeté dans une cuve de 100 litres d'eau non agitée. Le sac est totalement mouillé et passe en dessous de la surface de l'eau en moins de 10 secondes. Le film de PVA se dissout en 3 minutes et libère la poudre qui se disperse rapidement et de façon homogène dans l'ensemble de la cuve.

### Exemple 2

On reproduit l'exemple 1 mais en utilisant du carbonate de potassium à la place de l'hydrogénocarbonate de sodium.

On obtient des résultats identiques

### Exemple 3

On reproduit l'exemple 2 mais en utilisant du dioctylsulfosuccinate de sodium comme agent mouillant.

On obtient des résultats identiques

### Exemple 4

On mélange à sec les ingrédients suivants, à l'état de solides pulvérulents:
21 g de fongicide Bromuconazole
30 g d'acide citrique
27 g d'hydrogénocarbonate de sodium + 3 g de carbonate de sodium.
5 g de naphtalène sulfonate de sodium condensé avec du formol
5 g d'agent gonflant (carboxyméthyl cellulose)
3 g de lauryl sulfate de sodium
6 g d'agent desséchant (silice précipitée)

Ce mélange est introduit dans un sachet en alcool polyvinylique(polyacétate de vinyle hydrolysé à 88 %) soluble dans l'eau froide. selon un mode opératoire identique à celui de l'exemple 1. Tout élément de surface du sachet est en contact avec des solides pulvérulents de la composition, de sorte que l'on n'observe la présence d'aucune poche d'air. La densité du sachet est de 1,1.

Ce sac est jeté dans une cuve de 100 litres d'eau non agitée. Le sac est totalement mouillé et passe en dessous de la surface de l'eau en moins de 10 secondes.Le film de PVA se dissout en 3 minutes et libère la poudre qui se disperse rapidement de façon homogène.

### Exemple 5

On mélange à sec les ingrédients suivants à l'état de solides pulvérulents:
10,5 g de fongicide bromuconazole
30 g de pyrophosphate acide
30 g d'hydrogénocarbonate desodium
7,5 g d'agent dispersant ( naphtalène sulfonate de sodium condensé avec du formol )
3 g d'agent mouillant ( dioctyl sulfosuccinate de sodium )
19 g d'agent densifiant ( sulfate de baryum )

Ce mélange est aggloméré à sec et à température ambiante par passage entre deux cylindres tournant en sens contraire et poussés l'un vers l'autre par l'exercice d'une force de 2 tonnes par centimètre linéaire. Le mélange ainsi fritté est broyé et l'on obtient un mélange de granulés dont la taille moyenne varie de 50 micromètres à 3 millimètres. Les granulés obtenus sont introduits dans un sachet en alcool polyvinylique (polyvinylacétate de vinyle hydrolysé à 88 %) soluble dans l'eau froide. Ce sachet a été obtenu à partir d'un seul film rectangulaire qui a reçu deux lignes de soudure perpendiculaires. Après introduction des granulés, le sac reçoit une troisième ligne de soudure par scellage à chaud.

Ce sac est jeté dans une cuve de 100 litre d'eau agitée. Sa densité étant supérieure à 1, ce sac va au fond de la cuve en moins de 10 secondes. L'eau pénètre dans le sachet en moins d'une minute, et l'effervescence produite provoque le déchiquetage du film de PVA, ce qui facilite sa dissolution totale, atteinte en trois minutes. La poudre se disperse rapidement de façon homogène dans toutes les parties de la cuve.

### Exemple 6

On reproduit l'exemple 5 , mais en utilisant de l'acide adipique à la place du pyrophosphate acide, et du carbonate de sodium à la place du bicarbonate de sodium.

On obtient des résultats identiques.

### Exemple 7

On reprend l'exemple 5, mais en utilisant :
30 g d'iprodione
20 g de pyrophosphate acide
20 g de bicarbonate de sodium
7 g de naphtalène sulfonate de sodium condensé avec du formol
3 g d'agent mouillant ( dodécyl benzène sulfonate )
20 g d'agent densifiant ( sulfate de baryum )
   On obtient des résultats identiques.

### Exemple 8

On mélange à sec :
40 g de glyphosate
40 g de bicarbonate de sodium
20 g de charge( lactose )

Ce mélange est introduit à l'état de poudre dans un sachet en alcool polyvinylique soluble dans l'eau froide. On fait le vide dans ce sachet par le moyen d'une pompe donnant naissance à une pression absolue de 100 millibar. On scelle le sac à chaud.

Ce sac est jeté dans une cuve de 100 litres d'eau agitée. Sa densité étant supérieure à 1, ce sac va au fond de la cuve en moins de 10 secondes. L'eau pénètre dans le sachet au bout de 30 secondes et l'effervescence produite provoque le déchiquetage du film de PVA, ce qui facilite sa dissolution totale, atteinte en trois minutes. La poudre se disperse rapidement de façon homogène.

### Exemple 9

On mélange à sec :
250 g de dinoterbe
100 g d'acide citrique
100 g de carbonate de potassium
100 g d'agent mouillant ( polynaphtalène sulfonate de sodium )
30 g d'agent dispersant ( lignosulfonate de sodium )
420 g d'agent densifiant ( sulfate de baryum )

Ce mélange est introduit à l'état de poudre dans un sachet en PVA soluble dans l'eau froide. Le sac est scellé à chaud. L'aspect de ce sac et son comportement dans une cuve de 100 litre sont identiques à ceux décrits dans les exemples précédents.

## Revendications

1. Système de conteneurisation caractérisé en ce qu'il comprend :
a) un sac dont la paroi est un film constitué d'un matériau filmogène, soluble ou dispersable dans l'eau
b) une composition effervescente et pulvérulent, sous forme de poudre, granulés ou pastilles, comprenant un agent effervescent et une ou plusieurs matières pouvant présenter un danger à l'égard de l'environnement,
ledit sac étant fermé et renfermant ladite composition

2. Système de conteneurisation selon la revendication 1 caractérisé en ce que la matière pouvant présenter un danger à l'égard de l'environnement est une matière active en agriculture, notamment un agent pour la protection des plantes, un produit agrochimique, un pesticide, un régulateur de croissance, ou un agent de nutrition des plantes

3. Système de conteneurisation selon la revendication 2 caractérisé en ce que le pesticide est un herbicide, un insecticide, un fongicide, un nématicide, ou un acaricide

4. Système de conteneurisation selon l'une des revendications 1 à 3, caractérisé en ce que la quantité de composition effervescente à l'état pulvérulent est une quantité efficace pour traiter une zone donnée de terrain cultivé ou non cultivé

5. Système de conteneurisation selon l'une des revendications 1 à 4, caractérisé en ce que la composition effervescente à l'état pulvérulent est sous formé de poudre ayant une taille moyenne comprise entre 1 et 50 micrometres ou sous forme de granulés ou pastilles ayant une taille moyenne comprise entre 50 micrometres et 1 centimetre.

6. Système de conteneurisation selon la revendication 5, caractérisé en ce que les particules constitutives de la poudre ont une taille moyenne comprise entre 5 et 20 micromètres

7. Système de conteneurisation selon la revendication 5, caractérisé en ce que les granulés ont une taille moyenne comprise entre 150 micromètres et 5 millimètres

8. Système de conteneurisation selon l'une des revendications 5 ou 7 caractérisé en ce que les granulés résultent d'une opération de compactage, réalisée sans solvant ni séchage à une température inférieure à 50°C, de préférence à température ambiante

9. Système de conteneurisation selon l'une des revendications 5, 7 ou 8, caractérisé en ce que les granulés ont un espace interstitiel et/ou interparticulaire compris entre 0,05 et 20% en volume par rapport au volume d'un granulé pris isolément, de préférence compris entre 0,5 et 5%

10. Système de conteneurisation selon l'une des revendications 5, 7 ou 8, caractérisé en ce que le porogramme des granulés est essentiellement monomodal

11. Système de conteneurisation selon l'une des revendications 1 à 10 caractérisé en ce que sa densité est supérieure à 1, de préférence comprise entre 1,005 et 2

12. Système de conteneurisation selon l'une des revendications 1 à 11 caractérisé en ce que la composition effervescente à l'état pulvérulent comporte un agent densifiant

13. Système de conteneurisation selon la revendication 12 caractérisé en ce que l'agent densifiant est choisi parmi les sels de baryum ou de titane, de préférence parmi le sulfate de baryum ou le monoxyde de titane

14. Système de conteneurisation selon l'une des revendications 1 à 13, caractérisé en ce qu'il est exempt de poche gazeuse

15. Système de conteneurisation selon l'une des revendications 1 à 14 caractérisé en ce que, le sac étant scellé, il n'est pas possible de décoller manuellement la paroi du sac de la composition effervescente à l'état pulvérulent, et/ou il n'est pas possible de voir le moindre espace entre l'une et l'autre

16. Système de conteneurisation selon l'une des revendications 1 à 15 caractérisé en ce que les sacs sont remplis sous une pression absolue inférieure à 200 millibar, de préférence à 150 millibar

17. Système de conteneurisation selon l'une des revendications 1 à 16 caractérisé en ce que le sac en matériau filmogène contient la composition effervescente à l'état pulvérulent avec une atmosphère telle que la quantité d'eau présente dans cette atmosphère est inférieure à 4 mg par litre, de préférence à 3 mg par litre

18. Système de conteneurisation selon l'une des revendications 1 à 17 caractérisé en ce que la quantité de composition effervescente à l'état pulvérulent contenue dans le sac est comprise entre 1 g et 3 kg, de préférence entre 50 g et 1 kg

19. Système de conteneurisation selon l'une des revendications 1 à 18 caractérisé en ce que le matériau filmogène est choisi dans le groupe comprenant:
l'oxyde de polyéthylène, le polyéthylène glycol, l'amidon ou l'amidon modifié,
l'alkyl ou hydroxyalkylcellulose, telle que l'hydroxymethylcellulose,
l'hydroxyethylcellulose, l'hydroxpropyl cellulose; la carboxymethylcellulose;
l'alcool polyvinylique ; les polyvinylethers tels que le poly methyl vinylether ou le poly(2-methoxyethoxyethylene); le poly(2,4-dimethyl-6-triazinylethylene; le
poly(3-morpholinyl ethylene); le poly(N-1,2,4-triazolylethylene); l'acide poly(vinylsulfonique); les polyanhydrides; les résines melamine-formaldehyde ou
urée-formaldehyde à bas poids moléculaire; le poly(2-hydroxyethyl methacrylate); l'acide polyacrylique et ses homologues

20. Système de conteneurisation selon la revendication 19 caractérisé en ce que le matériau filmogène est l'oxyde de polyéthylène, la methylcellulose, ou l'alcool polyvinylique

21. Système de conteneurisation selon l'une des revendications 19 ou 20 caractérisé en ce que le matériau filmogène est l'alcool polyvinylique

22. Système de conteneurisation selon l'une des revendications 1 à 21 , caractérisé en ce que le sac contenant la composition effervescente à l'état pulvérulent comprend un premier film non plan en matériau soluble ou dispersable dans l'eau , ce premier film étant adjacent à un second film lui-même en matériau soluble ou dispersable dans l'eau le long d'un scellement continu liant ces deux films, le dit scellement constituant une région continue et essentiellement plane

23. Système de conteneurisation selon l'une des revendications 1 à 21 caractérisé en ce que le sac contenant la composition effervescente à l'état pulvérulent est constitué d'un seul film, et de préférence comprend au mois trois zones de scellement, dont deux sont sensiblement rectilignes et coplanaires et coupées par la troisième en deux zones sensiblement ponctuelles

24. Système de conteneurisation selon l'une des revendications 1 à 23 caractérisé en ce que l'agent effervescent est constitué d'un carbonate ou hydrogénocarbonate, et d'un acide

25. Système de conteneurisation selon la revendication 24 caractérisé en ce que le carbonate ou hydrogénocarbonate sont dérivés d'un métal alcalin ou alcalino-terreux ou d'un groupe ammonium ou organoammonium

26. Système de conteneurisation selon l'une des revendications 24 ou 25 caractérisé en ce que le carbonate ou hydrogénocarbonate sont dérivés du sodium ou du potassium

27. Système de conteneurisation selon l'une des revendications 24 à 26 caractérisé en ce que l'acide est un acide carboxylique ou polycarboxylique ou phosphorique ou phosphonique ou l'un de leurs sels ou esters à fonction acide

28. Système de conteneurisation selon l'une des revendications 24 à 27 caractérisé en ce que le rapport massique entre l'acide et le carbonate ou hydrogénocarbonate est compris entre 0,3 et 2, de préférence entre 0,5 et 1

29. Système de conteneurisation selon l'une des revendications 1 à 28 caractérisé en ce les compositions effervescentes à l'état pulvérulent comprennent en outre :
un agent mouillant
un agent dispersant
un agent de gonflement ou agent gonflant
un agent déssicant ou desséchant
un agent densifiant
un support ou charge

30. Système de conteneurisation selon l'une des revendication 1 à 29 caractérisé en ce que les compositions effervescentes comprennent :
entre 1 % et 80 % de matière active en agriculture,
entre 10 % et 80 % d'agent effervescent
entre 0 et 10 % d'agent mouillant, de préférence entre 0,1 et 8 %
entre 0 et 20 % d'agent dispersant, de préférence entre 3 et 15 %
entre 0 et 20 % d'agent gonflant, de préférence entre 1 et 15 %
entre 0 et 60 % d'agent densifiant, de préférence entre 5 et 20 %
entre 0 % et 30 % d'agent desséchant, de préférence entre 5 et 20 %
entre 0 et 50 % de support, de préférence entre 0 et 30 %

31. Système de conteneurisation selon l'une des revendications 1 à 30 caractérisé en ce qu'il comprend en outre un conteneur extérieur, constitué par une couche de papier cartonné souple et par une couche de polyéthylène collées l'une à l'autre

32. Système de conteneurisation selon la revendication 31 caractérisé en ce que le conteneur extérieur comprend en outre une couche d'aluminium collée au polyéthylène

33. Procédé de préparation d'un mélange destiné à être appliqué sur les surfaces cultivées ou non cultivées à traiter, caractérisé en ce qu'on met dans l'eau d'une cuve de pulvérisation un système de conteneurisation selon l'une des revendications 1 à 32

## Claims

1. Containerisation system, characterised in that it comprises:
a) a bag whose wall is a film consisting of a film-forming material which is soluble or dispersible in water
b) an effervescent and pulverulent composition, in the powder form or in the form of granules or pellets, comprising an effervescent agent and one or more materials which can present a danger to the environment,
the said bag being closed and containing the said composition.

2. Containerisation system according to Claim 1, characterised in that the material which can present a danger to the environment is an agriculturally active material, especially an agent for the protection of plants, an agrochemical product, a pesticide, a growth regulator, or a plant nutrition agent.

3. Containerisation system according to Claim 2, characterised in that the pesticide is a herbicide, an insecticide, a fungicide, a nematocide or an acaricide.

4. Containerisation system according to one of Claims 1 to 3, characterised in that the quantity of effervescent composition in the pulverulent form is a quantity effective for treating a given region of cultivated or uncultivated ground.

5. Containerisation system according to one of Claims 1 to 4, characterised in that the effervescent composition in the pulverulent form is in the powder form, the powder having a mean size of between 1 and 50 micrometres, or in the form of granules or pellets having a mean size of between 50 micrometres and 1 centimetre.

6. Containerisation system according to Claim 5, characterised in that the constituent particles of the powder have a mean size of between 5 and 20 micrometres.

7. Containerisation system according to Claim 5, characterised in that the granules have a mean size of between 150 micrometres and 5 millimetres.

8. Containerisation system according to either of Claims 5 and 7, characterised in that the granules result from a compaction operation, carried out without solvent or drying, at a temperature below 50°C, preferably at room temperature.

9. Containerisation system according to one of Claims 5, 7 and 8, characterised in that the granules have an interstitial and/or interparticular space between 0.05 and 20 % by volume with respect to the volume of the granule taken in isolation, and preferably between 0.5 and 5 %.

10. Containerisation system according to one of Claims 5, 7 and 8, characterised in that the porogram of the granules is essentially monomodal.

11. Containerisation system according to one of Claims 1 to 10, characterised in that its density is greater than 1, and preferably between 1.005 and 2.

12. Containerisation system according to one of Claims 1 to 11, characterised in that the effervescent composition in the pulverulent form contains a densifying agent.

13. Containerisation system according to Claim 12, characterised in that the densifying agent is chosen from barium or titanium salts, and preferably from barium sulphate and titanium monoxide.

14. Containerisation system according to one of Claims 1 to 13, characterised in that it is free of gas pockets.

15. Containerisation system according to one of Claims 1 to 14, characterised in that, when the bag is sealed, it is not possible to manually lift off the wall of the bag from the effervescent composition in the pulverulent form, and/or it is not possible to see the least space between the two.

16. Containerisation system according to one of Claims 1 to 15, characterised in that the bags are filled at an absolute pressure below 200 millibar, and preferably below 150 millibar.

17. Containerisation system according to one of Claims 1 to 16, characterised in that the bag made of film-forming material contains the effervescent composition in the pulverulent form with an atmosphere such that the quantity of water present in this atmosphere is less than 4 mg per litre, and preferably less than 3 mg per litre.

18. Containerisation system according to one of Claims 1 to 17, characterised in that the quantity of effervescent composition in the pulverulent form contained in the bag is between 1 g and 3 kg, and preferably between 50 g and 1 kg.

19. Containerisation system according to one of Claims 1 to 18, characterised in that the film-forming material is chosen from the group comprising: poly(ethylene oxide), poly(ethylene glycol), starch or modified starch, alkylcellulose or hydroxyalkylcellulose, such as hydroxymethylcellulose, hydroxyethylcellulose or hydroxypropylcellulose; carboxymethylcellulose; poly(vinyl alcohol); poly(vinyl ethers), such as poly(methyl vinyl ether) or poly(2-methoxy-ethoxyethylene); poly(2,4-dimethyl-6-triazinylethylene); poly(3-morpholinylethylene); poly(N-1,2,4-triazolylethylene); poly(vinylsulphonic acid); polyanhydrides; low molecular weight melamine/formaldehyde or urea/formaldehyde resins; poly(2-hydroxyethyl methacrylate); poly(acrylic acid) and its homologues.

20. Containerisation system according to Claim 19, characterised in that the film-forming material is poly(ethylene oxide), methylcellulose or poly(vinylalcohol).

21. Containerisation system according to either of Claims 19 and 20, characterised in that the film-forming material is poly(vinyl alcohol).

22. Containerisation system according to one of Claims 1 to 21, characterised in that the bag containing the effervescent composition in the pulverulent form comprises a first nonplanar film made of material which is soluble or dispersible in water, this first film being adjacent to a second film, itself made of material which is soluble or dispersible in water, along a continuous sealing uniting these two films, the said sealing constituting a continuous and essentially planar region.

23. Containerisation system according to one of Claims 1 to 21, characterised in that the bag containing the effervescent composition in the pulverulent form consists of a single film, and preferably comprises at least three sealing regions, two of which are essentially rectilinear and planar and cut by the third into two substantially isolated regions.

24. Containerisation system according to one of Claims 1 to 23, characterised in that the effervescent agent consists of a carbonate or hydrogencarbonate, and of an acid.

25. Containerisation system according to Claim 24, characterised in that the carbonate or hydrogencarbonate are derivatives of an alkali metal or of an alkaline-earth metal or of an ammonium or organoammonium group.

26. Containerisation system according to either of Claims 24 and 25, characterised in that the carbonate or hydrogencarbonate are derivatives of sodium or potassium.

27. Containerisation system according to one of Claims 24 to 26, characterised in that the acid is a carboxylic or polycarboxylic or phosphoric or phosphonic acid or one of their salts or esters containing an acidic functional group.

28. Containerisation system according to one of Claims 24 to 27, characterised in that the mass ratio between the acid and the carbonate or hydrogencarbonate is between 0.3 and 2, and preferably between 0.5 and 1.

29. Containerisation system according to one of Claims 1 to 28, characterised in that the effervescent compositions in the pulverulent form additionally comprise:
a wetting agent
a dispersing agent
a swelling agent or expanding agent
a desiccant or desiccating agent
a densifying agent
a vehicle or filler.

30. Containerisation system according to one of Claims 1 to 29, characterised in that the effervescent compositions comprise:
between 1 % and 80 % of agriculturally active material
between 10 % and 80 % of effervescent agent
between 0 and 10 % of wetting agent, preferably between 0.1 and 8 %
between 0 and 20 % of dispersing agent, preferably between 3 and 15 %
between 0 and 20 % of swelling agent, preferably between 1 and 15 %
between 0 and 60 % of densifying agent, preferably between 5 and 20 %
between 0 % and 30 % of desiccating agent, preferably between 5 and 20 %
between 0 and 50 % of vehicle, preferably between 0 and 30 %.

31. Containerisation system according to one of Claims 1 to 30, characterised in that it additionally comprises an external container, consisting of a layer of flexible cardboard paper and of a layer of polyethylene adhesively bonded to each other.

32. Containerisation system according to Claim 31, characterised in that the external container additionally comprises a layer of aluminium adhesively bonded to the polyethylene.

33. Process for the preparation of a mixture intended to be applied to the cultivated or uncultivated surfaces to be treated, characterised in that a containerisation system according to one of Claims 1 to 32 is put in water in a spray tank.

## Patentansprüche

1. Containerisierungssystem, dadurch gekennzeichnet, daß es umfaßt:
a) einen Sack, dessen Wand ein Film ist, welcher aus einem filmbildenden, in Wasser löslichen oder dispergierbaren Material zusammengesetzt ist,
b) eine schäumende und pulverförmige Zusammensetzung in Pulver-, Granulat- oder Pastillenform, welche ein Schaummittel und ein oder mehrere Materialien umfaßt, welche eine Gefahr im Hinblick auf die Umwelt zeigen können, wobei der Sack geschlossen ist und die Zusammensetzung umfaßt.

2. Containerisierungssystem nach Anspruch 1, dadurch gekennzeichnet, daß das Material, das eine Gefahr im Hinblick auf die Umwelt zeigen kann, ein in der Landwirtschaft aktives Material ist, insbesondere ein Mittel zum Schutz von Pflanzen, ein agrokulturchemisches Produkt, ein Pestizid, ein Wachstumsregulierungsmittel oder ein Pflanzennahrungsmittel ist.

3. Containerisierungssystem nach Anspruch 2, dadurch gekennzeichnet, daß das Pestizid ein Herbizid, ein Insektizid, ein Fungizid, ein Nematizid oder ein Akarizid ist.

4. Containerisierungssystem nach einem der Ansprüche 1 bis 3, dadurch gekennzeichnet, daß die Menge der schäumenden Zusammensetzung im pulverförmigen Zustand eine zur Behandlung eines gegebenen kultivierten oder nicht-kultivierten Bereiches wirksame Menge ist.

5. Containerisierungssystem nach einem der Ansprüche 1 bis 4, dadurch gekennzeichnet, daß die schäumende Zusammensetzung im pulverförmigen Zustand in Form eines Pulvers mit einer mittleren Größe, welche zwischen 1 und 50 µm enthalten ist oder in Form von Granulaten oder Pastillen mit einer mittleren Größe, welche zwischen 50 µm und 1 cm enthalten ist, vorliegt.

6. Containerisierungssystem nach Anspruch 5, dadurch gekennzeichnet, daß die das Pulver bildenden Teilchen eine mittlere Größe aufweisen, welche zwischen 5 und 20 µm liegt.

7. Containerisierungssystem nach Anspruch 5, dadurch gekennzeichnet, daß die Granulate eine mittlere Größe aufweisen, welche zwischen 150 µm und 5 mm liegt.

8. Containerisierungssystem nach einem der Ansprüche 5 oder 7, dadurch gekennzeichnet, daß das Granulat aus einem Verdichtungsverfahren resultiert, das ohne Lösungsmittel und Trocknen bei einer Temperatur unterhalb von 50 °C, vorzugsweise bei Raumtemperatur, durchgeführt wird.

9. Containerisierungssystem nach einem der Ansprüche 5, 7 oder 8, dadurch gekennzeichnet, daß das Granulat einen interstitiellen und/oder interpartikulären Raum aufweist, welcher zwischen 0,05 bis 20 Vol% bezogen auf das Volumen eines vereinzelten Granulatkörnchen, vorzugsweise zwischen 0,5 und 5%, aufweist.

10. Containerisierungssystem nach einem der Ansprüche 5, 7 oder 8, dadurch gekennzeichnet, daß das Porogramm des Granulates im wesentlichen monomodal ist.

11. Containerisierungssystem nach einem der Ansprüche 1 bis 10, dadurch gekennzeichnet, daß seine Dichte über 1, vorzugsweise zwischen 1,005 und 2, liegt.

12. Containerisierungssystem nach einem der Ansprüche 1 bis 11, dadurch gekennzeichnet, daß die im pulverförmigen Zustand schäumende Zusammensetzung ein Verdichtungsmittel umfaßt.

13. Containerisierungssystem nach Anspruch 12, dadurch gekennzeichnet, daß das Verdichtungsmittel aus den Salzen von Barium oder Titan, vorzugsweise dem Sulfat von Barium oder Titanmonoxid ausgewählt ist.

14. Containerisierungssystem nach einem der Ansprüche 1 bis 13, dadurch gekennzeichnet, daß es keine gasförmigen Taschen aufweist.

15. Containerisierungssystem nach einem der Ansprüche 1 bis 14, dadurch gekennzeichnet, daß es bei dicht verschlossenem Sack nicht möglich ist, die Wand des Sackes der schäumenden Zusammensetzung im pulverförmigen Zustand manuell abzulösen, und/oder es nicht möglich ist, den geringen Zwischenraum zwischen dem einen und anderen zu sehen.

16. Containerisierungssystem nach einem der Ansprüche 1 bis 15, dadurch gekennzeichnet, daß die Säcke unter einem absoluten Druck unterhalb von 200 mbar, vorzugsweise bei 150 mbar gefüllt werden.

17. Containerisierungssystem nach einem der Ansprüche 1 bis 16, dadurch gekennzeichnet, daß der Sack aus filmbildendem Material die schäumende Zusammensetzung im pulverförmigen Zustand bei einer derarten Umgebungsluft umfaßt, daß die Menge an in der Umgebungsluft enthaltenem Wasser unter 4 mg/l, vorzugsweise 3 mg/l, liegt.

18. Containerisierungssystem nach einem der Ansprüche 1 bis 17, dadurch gekennzeichnet, daß die Menge an schäumender Zusammensetzung im pulverförmigen Zustand, welche in dem Sack enthalten ist, zwischen 1 g bis 3 kg, vorzugsweise zwischen 50 g und 1 kg, enthalten ist.

19. Containerisierungssystem nach einem der Ansprüche 1 bis 18, dadurch gekennzeichnet, daß das filmbildende Material aus der Gruppe ausgewählt ist, welche umfaßt:
Polyethylenoxid, Polyethylenglykol, Stärke oder modifizerte Stärke, Alkyl- oder Hydroxialkylcellulose, wie Hydroximethylcellulose, Hydroxiethylcellulose, Hydroxypropylcellulose, Carboximethylcellulose, Polyvinylalkohol, Polyvinylether, wie Polymethylether oder Poly-(2-methoxiethoxiethylen), Poly-(2,4-dimethyl-6-triazinylethylen), Poly-(3-morpholinylethylen), Poly-(N-1,2,4-triazolylethylen), Polyvinylsulfonsäure, Polyanhydride, die Melamin-Formaldehyd- oder Harnstoff -Formaldehydharze mit niederem Molekulargewicht, Poly-(2-hydroxiethylmethacrylat), Polyacrylsäure oder ihre Homologen.

20. Containerisierungssystem nach Anspruch 19, dadurch gekennzeichnet, daß das filmbildende Material Polyethylenoxid, Methylcellulose oder Polyvinylalkohol ist.

21. Containerisierungssystem nach einem der Ansprüche 19 oder 20, dadurch gekennzeichnet, daß das filmbildende Material Polyvinylalkohol ist.

22. Containerisierungssystem nach einem der Ansprüche 1 bis 21, dadurch gekennzeichnet, daß der die schäumende Zusammensetzung im pulverförmigen Zustand enthaltende Sack einen nicht-planen Film aus wasserlöslichem oder dispergierbarem Material umfaßt, wobei dieser erste dünne Film an einen zweiten dünnen Film, welcher selbst aus in Wasser löslichem oder dispergierbarem Material besteht, über die Länge einer kontinuierlichen Versiegelung angrenzt, welche die beiden Filme verbindet, wobei die Versiegelung einen kontinuierlichen und im wesentlichen planen Bereich bildet.

23. Containerisierungssystem nach einem der Ansprüche 1 bis 21, dadurch gekennzeichnet, daß der die schäumende Zusammensetzung im pulverförmigen Zustand enthaltende Sack aus einem einzigen dünnen Film gebildet ist, und vorzugsweise wenigstens drei Versiegelungszonen umfaßt, wovon zwei im wesentlichen gradlinig und coplanar sind und durch eine Dritte in zwei im wesentlichen punktuelle Zonen unterbrochen sind.

24. Containerisierungssystem nach einem der Ansprüche 1 bis 23, dadurch gekennzeichnet, daß das Schäumungsmittel aus einem Carbonat oder Hydrogencarbonat und einer Säure gebildet ist.

25. Containerisierungssystem nach Anspruch 24, dadurch gekennzeichnet, daß das Carbonat oder Hydrogencarbonat von einem Alkali- oder Erdalkalimetall oder einer Ammonium- oder Organoammoniumgruppe abgeleitet ist.

26. Containerisierungssystem nach einem der Ansprüche 24 oder 25, dadurch gekennzeichnet, daß das Carbonat oder Hydrogencarbonat von Natrium oder Kalium abgeleitet ist.

27. Containerisierungssystem nach einem der Ansprüche 24 bis 26, dadurch gekennzeichnet, daß die Säure eine Carbon- oder Polycarbonsäure oder eine Phosphor- oder Phosphonsäure oder eines ihrer Salze oder Ester mit Säurefunktion ist.

28. Containerisierungssystem nach einem der Ansprüche 24 bis 27, dadurch gekennzeichnet, daß das Masseverhältnis zwischen der Säure und dem Carbonat oder Hydrogencarbonat zwischen 0,3 und 2, vorzugsweise zwischen 0,5 und 1, enthalten ist.

29. Containerisierungssystem nach einem der Ansprüche 1 bis 28, dadurch gekennzeichnet, daß die schäumende Zusammensetzung im pulverförmigen Zustand des weiteren:
ein Netzmittel
ein Dispergiermittel
ein Quellmittel
ein Trockenmittel
ein Verdichtungsmittel
einen Träger oder eine Beschickung
umfaßt.

30. Containerisierungsmittel nach einem der Ansprüche 1 bis 29, dadurch gekennzeichnet, daß die schäumenden Zusammensetzungen:
zwischen 1% bis 80% landwirtschaftlich aktives Material, zwischen 10% und 80% Schaummittel,
zwischen 0% und 10%, vorzugsweise zwischen 0,1% und 8%, Netzmittel,
zwischen 0% und 20%, vorzugsweise zwischen 3% und 15%, Dispergiermittel,
zwischen 0% und 20%, vorzugsweise zwischen 1% und 15%, Quellmittel,
zwischen 0% und 60%, vorzugsweise zwischen 5% und 20%, Verdichtungsmittel,
zwischen 0% und 30%, vorzugsweise zwischen 5% und 20%, Trockenmittel,
zwischen 0% und 50%, vorzugsweise zwischen 0% und 30%, Träger
umfaßt.

31. Containerisierungssystem nach einem der Ansprüche 1 bis 30, dadurch gekennzeichnet, daß es des weiteren einen äußeren Behälter umfaßt, der durch eine flexible kartonierte Papierschicht und eine Polyethylenschicht gebildet ist, welche miteinander verklebt sind.

32. Containerisierungssystem nach Anspruch 31, dadurch gekennzeichnet, daß der äußere Behälter des weiter eine Aluminiumschicht umfaßt, welche mit dem Polyethylen verklebt ist.

33. Verfahren zur Herstellung einer für den Einsatz auf zu behandelnde kultivierte oder nicht-kultivierte Oberflächen bestimmten Mischung, dadurch gekennzeichnet, daß man im Wasser eines Zerstäuberbehälters ein Containerisierungssystem nach einem der Ansprüche 1 bis 32 einsetzt.
